# EUROPEAN PATENT SPECIFICATION

(11) **EP 2 872 310 B1**
(45) Date of publication and mention of the grant of the patent: **05.09.2018**
(21) Application number: 13736703.3
(22) Date of filing: 26.06.2013
(51) Int. Cl.: B29C 45/14, H01T 19/00, G03G 15/02

(54) **METHOD FOR ELECTROSTATIC CHARGING OF NON-CONDUCTING OBJECTS**
VERFAHREN FÜR DIE ELEKTROSTATISCHE LADUNG VON NICHTLEITENDEN GEGENSTÄNDEN
PROCÉDÉ POUR LA CHARGE ÉLECTROSTATIQUE D'OBJETS NON CONDUCTEURS

(30) Priority: 26.06.2012 DE 102012012520
(43) Date of publication of application: 20.05.2015
(73) Proprietor: Illinois Tool Works Inc., Glenview, IL 60025 (US)
(72) Inventor: VREEMAN, Jan, 7241 CH Lochem (NL); JONKMAN, Martijn, 7424 EP Deventer (NL); van't HUL, Erwin, 7231 RE Warnsveld (NL)
(74) Representative: Trinks, Ole
(86) International application number: PCT/US2013/047822
(87) International publication number: WO 2014/004626

(56) References cited:
- EP-B1- 0 802 032
- DE-A1- 1 589 781
- US-A- 3 604 925
- US-A1- 2010 186 892

## Description

The invention relates to a method for the electrostatic charging of non-conducting objects according to the preamble of claim 1. Document US 3 604 925 A discloses the preamble of claim 1.

The specific electrostatic charging of surfaces of non-conducting objects plays an important part in industrial production. One example of an application is that known as "in mold labeling" (IML), which concerns a special way of carrying out a plastics injection-molding process. This involves fixing film-like, non-conducting labels to the forming areas of the injection mold, and so the application of the labels is integrated in the injection-molding operation.

In the course of the aforementioned IML method, it has been found to be advantageous to fix the labels to the forming areas of the injection mold by electrical charging. In the case of the known method (EP 0 802 032 B1), on which the invention is based, a label is held by means of a mold core in the injection-molding cavity of the injection mold and electrostatically charged, and so the label is electrostatically attached to the wall of the injection-molding cavity. The charging takes place in the manner of an ionizer, in that the voltage supplying device applies to an electrode arranged on the mold core a high charging voltage against ground.
The IML method described above is used in mass production, for example in the production of containers made of plastic such as pots of paint or the like. The objects are charged individually in successive charging cycles, the maintaining of lowest-possible production cycle times being of most particular importance.

In the case of the known method, for each charging cycle a minimum cycle time must be provided with a certain "safety margin", in order to make sure that reliable attachment is ensured even under possibly unfavorable ambient conditions. Influencing factors that have an effect on the charging operation are, for example, the ambient temperature, the ambient humidity or the like. Maintaining the aforementioned safety margin also means, however, that, for the safety reasons mentioned, the cycle times are usually longer than is actually required, which is contrary to the aim of minimal production cycle times.

The invention addresses the problem of designing and developing the known method in such a way that minimizing the cycle times of the charging cycles can be implemented with little effort.

The aforementioned problem is solved in the case of a method according to the preamble of claim 1 by the features of the characterizing part of claim 1.

The crucial point is the realization that the charging current during a charging cycle is not determined by the high charging voltage alone, but also by the aforementioned ambient conditions, such as the ambient temperature, ambient atmospheric humidity, etc. Consequently, it can conversely be concluded that the charging current can be analyzed in order to parameterize the charging cycles to the ambient conditions respectively prevailing at a given time.

Specifically, it is proposed that in the charging cycles the charging current attributable to the respective high charging voltage is measured and that the charging cycles are parameterized in dependence on the measured charging current or the measured charging currents. Particularly advantageous in this respect is the fact that the method according to the proposal allows the charging cycles to be adapted optimally to the respectively prevailing ambient conditions without any kind of sensors having to be provided for measuring the atmospheric humidity, temperature or the like.

The parameterization of a charging cycle comprises in the present case all the variable parameters that characterize the charging cycle. Examples of these are the high charging voltage, the point in time of the end of the cycle or the like.

A particularly preferred design according to claim 3 provides that the setpoint values for the high charging voltage are preset in a high-voltage power supply unit, it being possible for the power supply unit to comprise an open-loop or closed-loop voltage control. Alternatively or in addition, an open-loop or closed-loop current control may also be provided.

According to claim 4, the parameterization of a charging cycle comprises the determination and presetting of a setpoint value and/or a variation in the setpoint value for the high charging voltage. For example, it may be provided that a particularly low measured charging current, which lies below a current threshold value, leads to the setpoint value for the high charging current being raised in the course of the parameterization.

A further preferred variant for the parameterization of the charging cycle, which may be provided in addition to the aforementioned variant, is the determination and introduction of the end of the cycle of a charging cycle according to claim 8. In the case of the further preferred design according to claim 9, a switching-off condition based on the charging current is provided for the determination of the end of the cycle, and the occurrence thereof immediately leads to the introduction of the end of the cycle. It is consequently possible in principle to keep the cycle time for the charging cycle as low as possible without adversely affecting the respectively desired charging operation. Two particularly preferred variants for the determination of the end of the cycle are shown by claim 9.

In the event that the charging cycle takes place too slowly, that is to say needs more time than a predetermined limiting charging time, it is proposed according to claim 11 to set the high charging voltage for the following charging cycle, in particular for the next charging cycle, correspondingly high.

On the basis of further teaching, which is of importance in its own right, a method for the electrostatic charging of non-conducting objects according to claim 12 is claimed.

The crucial point according to this further teaching is the realization that the high charging voltage applied to the electrode must be switched off as quickly as possible after the ending of the charging cycle, in particular must be brought down to a no-load voltage, so that undesired influencing of the charged state of the non-conducting object does not occur, in particular as a result of removal of the electrode. The rapid reduction of the voltage at the high-voltage output of the supplying device is not without its problems, to the extent that a certain output voltage is maintained as a result of capacitances that are attributable inter alia to the leads between the supplying device and the electrode, to the electrode itself, etc. Hereinafter, these capacitances are subsumed by the term "parasitic capacitance".

It is then proposed on the basis of the further teaching according to claim 12 that the high-voltage output of the supplying device is bridged by a discharge section after the ending of the charging cycle.

The term "discharge section" should be understood broadly in the present case. It comprises all electrically conducting arrangements that are suitable for making a discharge of the aforementioned, parasitic capacitances possible.

An alternative in the course of the further teaching is that the discharge section is not coupled to the high-voltage output of the supplying device specifically, that is to say by a switching operation, after the ending of the charging cycle, but that the discharge section is always coupled to the high-voltage output of the supplying device. This variant can be realized at particularly low cost, since a switch of some kind or other and a corresponding switch activation do not have to be provided.

On the basis of further teaching according to claim 15, which is likewise of importance in its own right, a device for carrying out a method according to the proposal is claimed. Reference may be made to all of the statements that have been made and are suitable for explaining the device assigned to the method according to the proposal.

The invention is explained in more detail below on the basis of a drawing, which merely represents an exemplary embodiment and in which:
- Figure 1: shows an IML device for carrying out a method according to the proposal, a) before a charging cycle and b) during an injection-molding cycle,
- Figure 2: shows a) charging currents during a charging cycle of the device according to Figure 1 in three variants, which are based on the setpoint values shown in b) for the high charging voltage, in each case with a preset fixed cycle time,
- Figure 3: shows a) the charging current of a charging cycle at an automatically determined and set end of the cycle and b) the assigned setpoint value for the high charging voltage, and
- Figure 4: shows a circuit diagram for the high-voltage supplying device for the device according to Figure 1.

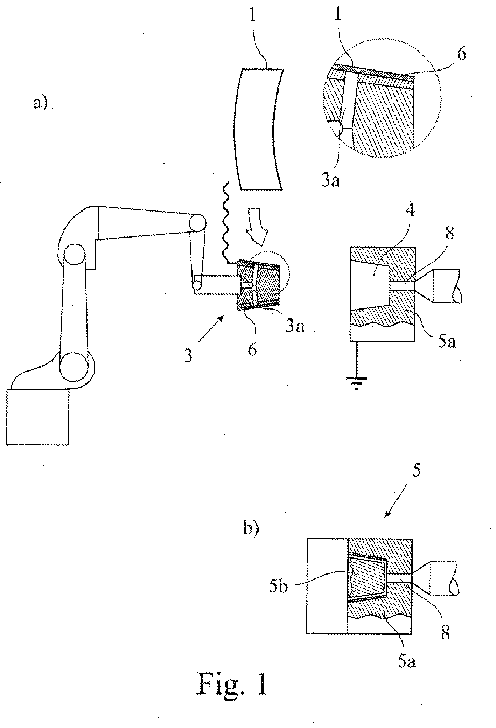

The drawing shows the method according to the proposal by way of example as a component part of an IML production method. To this extent, the objects 1 to be charged are non-conducting, film-like labels, which in Figure 1a) are arranged on a mold core 3. Figure 1a) also shows a label 1 as such by a dashed line, in order to show the shaping of the label 1. The label 1 consists here, and preferably, of a plastics material. Other materials, such as paper or the like, are conceivable.

It may also be pointed out that the method according to the proposal can be used in wide areas, including outside the IML method. To this extent, the object 1 to be charged may be some kind of object that can be charged in the course of ionization.

The electrostatic charging of the objects 1 takes place individually in successive charging cycles. For this, in the case of the exemplary embodiment represented the object 1 to be charged, here the label 1, is applied to the mold core 3 and fixed there pneumatically by way of negative-pressure channels 3a. Subsequently, the mold core 3, with the label 1 located on its outer surface, is brought into the injection-molding cavity 4 of an opened, two-part injection mold 5. Figure 1a) shows on the right side the one part 5a of the opened injection mold 5, while Figure 1b) also shows the second part 5b of the injection mold 5, which in Figure 1b) is in sealing engagement with the first part 5a.

The mold core 3 is provided on its outer side with an electrode 6, to which the object 1 to be charged has been applied in the aforementioned way.

The mold core 3 is moved out of the position shown in Figure 1a) into the injection-molding cavity 4 of the injection mold 5, until the object 1 to be charged, here the label 1, comes into contact with the inner wall or close to the inner wall of the first part 5a of the injection mold 5. Subsequently, in a charging cycle 2, the object 1 to be charged is charged by way of the electrode 6, to which in the manner of an ionizer there is applied for this purpose by means of a supplying device 7 a high charging voltage U_{charge} against ground. The high charging voltage U_{charge} preferably lies here in the kV range, the current preferably lies in the µA range or the mA range.

The charging of the label 1 causes the label 1 to be attached to the inner side of the first part 5a of the injection mold 5. Before the mold core 3 with the electrode 6 can be moved out again from the injection-molding cavity 4, the high charging voltage U_{charge} is lowered in a way still to be explained. In a preferred variant, however, this happens before the high charging voltage U_{charge} has been lowered completely, in particular to a no-load voltage or to 0 V, in order to save production cycle time. With preference, the mold core 3 is already moved out from the injection-molding cavity 4 when the high charging voltage U_{charge} has been lowered to an uncritical amount, for example to a voltage between approximately 50 V and 300 V.

Numerous advantageous variants are conceivable for the design of the electrode 6. Here, and preferably, the electrode 6 has a slightly electrically conducting layer, at least in the region in which the label 1 is to be carried. For this design of the electrode 6 and for the basic design of the IML method, reference may be made to EP 0 802 032 B1, which originates from the applicant and the content of which is to this extent made the subject matter of the present application.

The electrode 6 may, however, also be designed in an entirely different way. In particular, it is not functionally necessary for the electrode to be provided with an electrically slightly conducting layer.

Furthermore, it is conceivable that a multipart electrode 6 and/or a number of electrodes 6 is or are provided.

To the at least one electrode 6 there may be applied, as here, the high charging voltage U_{charge} against ground. It is also conceivable, however, for the high charging voltage U_{charge} to be applied to the electrode 6 such that it discharges to least one counter electrode.

After the removal of the mold core 3 from the injection-molding cavity 4, the injection mold 5 is closed by the sealing engagement of the two parts 5a, 5b, and so the injection-molding operation can be completed in a way that is customary per se. Figure 1b) shows a corresponding feed channel 8, by way of which the liquid plastic is introduced into the injection-molding cavity 4. The aforementioned charging and injection-molding cycle is repeated identically for the number of products to be produced. Here, and preferably, the product to be produced is a cup that is to be provided with the label 1.

In order to ensure a high level of reliability of the process, it is provided that the charging cycles for charging the respective object 1 can be parameterized by means of the supplying device 7. The parameterization primarily concerns the high charging voltage U_{charge} and the point in time of the end of the cycle of the charging cycle 2, as still to be explained. The essential point is that the parameterization of the charging cycles 2 is derived from the actual charging current I_{charge}. For this, in the charging cycles 2 the charging current I_{charge} attributable to the respective high charging voltage U_{charge} is measured, the charging cycles 2 being parameterized in dependence on the measured charging current I_{charge} or the measured charging currents.

The parameterization of the charging cycles 2 in dependence on the charging current I_{charge} may take place in quite different ways. In a first variant, it may be provided that at least part of the parameterization of a charging cycle 2 is derived from the charging current I_{charge} measured in a previous charging cycle 2. The previous charging cycle 2 may be the directly preceding charging cycle 2, or a charging cycle 2 further back in time. With these two variants there are numerous possibilities for the parameterization of the charging cycles 2. It may be pointed out that here, and preferably, the two variants can even be combined with one another, as becomes clear from the following explanations.

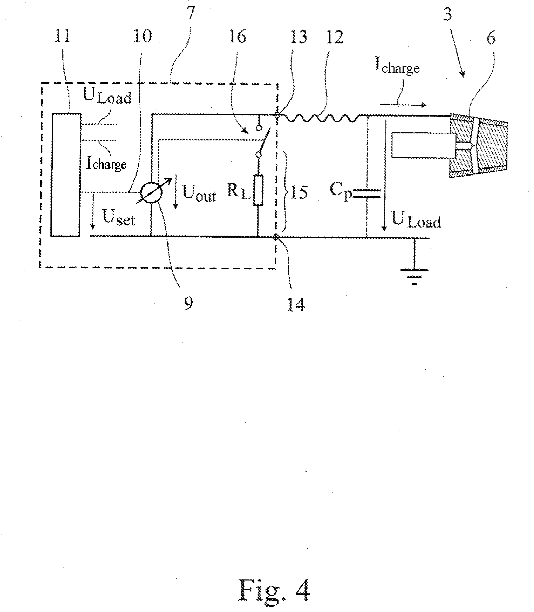

One of the reasons why the charging cycles 2 can be parameterized is that the supplying device 7 is provided with a power supply unit 9 in which setpoint values for the high charging voltage U_{charge} are preset. Here, and preferably, the setpoint values are preset in the form of a control voltage Uₛₑₜ, which is switched to a control input 10 of the power supply unit 9. The control input 10 of the power supply unit 9 is indicated in Figure 4.

Here, and preferably, the supplying device 7 is provided with a control device 11, which controls the parameterization of the charging cycles 2. The main tasks of the control device 11 are the measurement of the charging current I_{charge}, preferably by way of the power supply unit 9, possibly the measurement of the high charging voltage U_{charge}, and the determination and conversion of the respective parameter values. The measurements of the charging current I_{charge} and the high charging voltage U_{charge} are indicated in Figure 4 by way of corresponding control leads, represented by dashed lines, entering the control device 11.

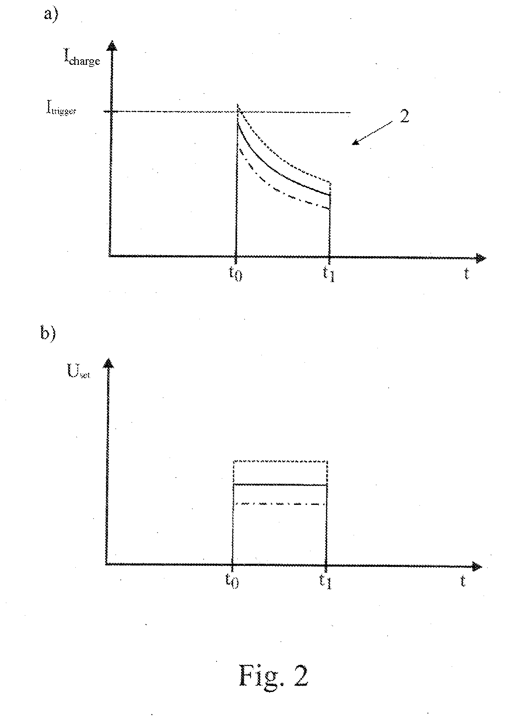

Figure 2a) shows the variation in the charging current I_{charge} for three different high charging voltages U_{charge} in an idealized form. Figure 2b shows the setpoint values for the respective high charging voltage U_{charge}. Depending on the design of the power supply unit 9 and the circuit-related boundary conditions, the actual high charging voltage U_{charge} often approximates more or less to the setpoint value after a time delay.

In Figures 2a) and 2b), the values are shown in a different form of linear representation, in order to establish the assignment of the respective current and voltage values. It is fundamentally clear from this representation that the charging current I_{charge} can be specifically influenced by a parameterization of the high charging voltage U_{charge} or the setpoint value thereof. If, for example, the charging current I_{charge} is too low on account of unfavorable ambient conditions, it is possible, for example, to raise the setpoint value for the high charging voltage U_{charge} correspondingly for a following charging cycle, in particular for the next charging cycle. A simple example of the determination of a charging current I_{charge} that is too low is, for example, the checking of the initial value Iₘₐₓ of the charging current I_{charge} at the point in time t₀ (Figure 2a) with regard to whether it goes below a current threshold I_{trigger}. In this way the charging cycles can be parameterized to the respectively prevailing ambient conditions without any sensors being required for measuring the ambient conditions.

It is quite generally the case that, in the course of the parameterization of a charging cycle 2, the setpoint value and/or the variation in the setpoint value for the high charging voltage U_{charge} is or are determined from the amount of and/or the variation in the charging current I_{charge}.

For example, in dependence on a value derived from the charging current I_{charge} in one charging cycle 2, in particular on the amount of the charging current I_{charge} at a predetermined point in time within the charging cycle 2, the setpoint value for the high charging voltage U_{charge} for a following charging cycle 2 may be increased or reduced. Preferably, in this case the setpoint value for the high charging voltage U_{charge} is set initially to an overly high value in the case of the first object 1 to be charged. In the subsequent charging cycles, the setpoint value will settle down to an operating setpoint value as a result of the ongoing parameterization.

In a particularly preferred design, in dependence on the charging current I_{charge} in one charging cycle 2, the setpoint value for the high charging voltage U_{charge} for a following charging cycle 2 is determined and preset in such a way that at least approximately a predetermined amount of charge is applied to the object 1 in a predetermined charging time in the following charging cycle 2. If, for example, the measured charging current indicates that the amount of charge applied in a predetermined time window is too low, the high charging voltage U_{charge} is increased correspondingly for a following charging cycle. It may be pointed out that the actual value for the amount of charge applied does not have to be determined. Rather, the parameterization may, for example, be performed such that the amount of charge set once in tests - but not explicitly determined - is substantially adopted in all the following charging cycles.

Here, and preferably, it is additionally the case that the parameterization of a charging cycle 2 also comprises the determination and introduction of the end of the cycle. The end of the cycle is therefore not preset as a fixed value, but is preferably newly determined for each charging cycle. The introduction of the end of the cycle corresponds here to the switching off of the high charging voltage U_{charge} or the presetting of the setpoint value Uₛₑₜ for the high charging voltage U_{charge} to a no-load voltage, here to a voltage of 0 V. The switching off of the high charging voltage U_{charge} means here the switching off of the power supply unit 9. A disconnection of the electrode 6 from the power supply unit 9 is not required in this case.

In dependence on the circuit-related boundary conditions, the high charging voltage U_{charge} falls with a delay still to be explained.

The determination of the end of the cycle is based on the monitoring of a switching-off condition, which is performed by the supplying device 7, here by the control device 10 of the supplying device 7. The switching-off condition is defined on the basis of the charging current I_{charge} during the charging cycle 2, and so it is also the case that no sensors or the like are required for the determination of the end of the cycle.

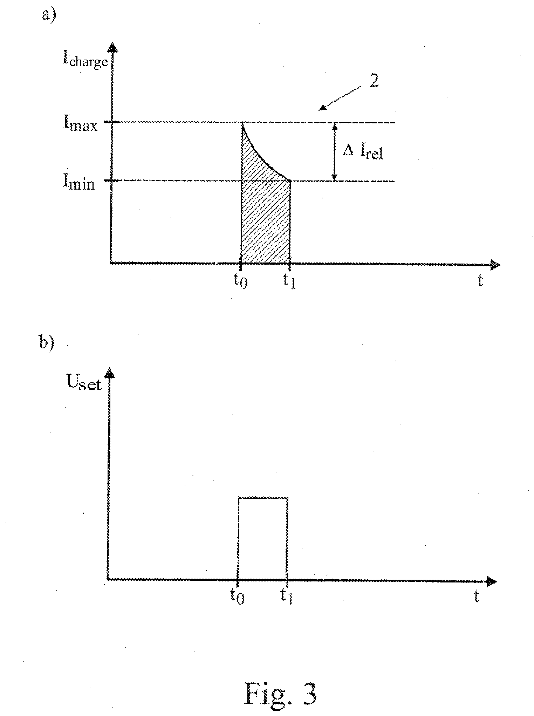

Numerous variants are conceivable for the definition of the switching-off condition. In a design that is particularly easy to implement, it is provided that the switching-off condition is the exceeding of a predetermined lowering of the charging current I_{charge} during a charging cycle 2. In a variant that is easy to realize, the predetermined lowering corresponds to a percentage fall in the charging current I_{charge} in relation to an initial current value Iₘₐₓ at the point in time t₀. Figure 3a) shows that a lowering of the charging current I_{charge} by the value ΔIᵣₑₗ leads to the switching-off condition being satisfied. The detection of the switching-off condition by the control device 10 of the supplying device 7 leads to the immediate introduction of the end of the cycle of the charging cycle, here by switching off of the high charging voltage U_{charge} or by presetting of the setpoint value for the high charging voltage U_{charge} to a no-load voltage, here to 0 V.

Another preferred variant for the switching-off condition is provided by the determination of a value for the charge already applied during the charging cycle 2 that is in progress. For this, the charging current I_{charge} is integrated over the charging time, the switching-off condition corresponding to the reaching of a predetermined charge threshold by the integral of the charging current I_{charge} over the charging time. Figure 3a) shows the integral of the charging current I_{charge} over the charging time in a shaded area. The shaded area is a measure of the charge applied to the object 1 at the respective point in time.

Of interest in the aforementioned parameterization of the end of the cycle is the fact that the cycle time, here the difference between the point in time of the end of the cycle t₁ and the point in time of the beginning of the cycle t₀, can be set individually to a minimum value for each charging cycle 2. This makes it possible to shorten the production cycle time, determined inter alia by the charging cycles 2, for example for the IML method represented. Conversely, however, it is also ensured that, under unfavorable ambient conditions, the cycle time is extended, so that sufficient charging is always ensured. Against this background, preferably a predetermined limiting charging time is provided, this being the cycle time that is just still tolerable. In the event that the switching-off condition has not yet occurred by the time the limiting charging time elapses, the setpoint value for the high charging voltage U_{charge} is increased for the next charging cycle 2 respectively. It can be seen from the representation according to Figure 2 that such an increase is accompanied by an increase in the charging current I_{charge}, and so the charging of the object 1 proceeds correspondingly more quickly.

It may also be pointed out that the automatic parameterization of the charging cycles 2 according to the proposal may be combined with an external presetting of the setpoint value for the high charging voltage U_{charge}. In a variant, an external voltage Uₛₑₜ for the setpoint value is preset in the power supply unit 9, and so the high charging voltage U_{charge} is influenced exclusively by the external presetting, and not by the parameterization according to the proposal. However, it is also conceivable that the parameterization sets a high charging voltage U_{charge} that deviates from the external presetting. This may be advantageous if a specific high charging voltage U_{charge} is set externally and has to be adapted in the light of changing ambient conditions in order to achieve the desired charging operation.

Figure 4 shows a preferred design of the supplying device 7. The already discussed components that are the power supply unit 9 and the control device 10 can be seen there. It can also be seen from the representation according to Figure 4 that a lead 12 is provided between the supplying device 7 and the electrode 6. With the aim of providing a representation as an overview, also represented is a capacitance Cp, which corresponds to the parasitic capacitance of the lead 12, the electrode 6, etc. The lead 12 as such indeed represents a certain capacitance with respect to ground that increases in magnitude with the length of the lead 12.

It is clear from the representation according to Figure 4 that the variability of the high charging voltage U_{charge} is also influenced by the parasitic capacitance Cₚ. This is so because every change in the high charging voltage U_{charge} is associated with a reversal in the charge of the parasitic capacitance Cₚ. This means, for example, that, at that point in time t₁, at which the high charging voltage U_{charge} is switched off or the setpoint value for the high charging voltage U_{charge} is set to a no-load voltage, preferably to 0 volt, an immediate reduction of the high charging voltage U_{charge} to the no-load voltage or to 0 V often does not take place. Rather, unless additional measures are taken, the high charging voltage U_{charge} falls with a time delay in a way corresponding to the capacitance Cp and, inter alia, the line resistance of the lead 12. This is disadvantageous per se, since the mold core 3 with the electrode 6 can only be moved out from the injection-molding cavity 4 when the high charging voltage U_{charge} has been brought down correspondingly. Otherwise, the movement of the mold core 3 would again lead to undesired charge transfers and an adverse effect on the fixing of the label 1 on the injection mold 5.

A preferred measure for speeding up the discharging of the parasitic capacitance Cₚ is thus that the high-voltage output 13, 14 of the supplying device 7 is bridged with a discharge section 15 after the ending of the charging cycle, or is constantly bridged.

In the case of the exemplary embodiment represented and preferred to this extent, the discharge section 15 has an ohmic discharge resistor R_{L}, which can be connected to the high-voltage output 13, 14 of the supplying device 7. Provided for this is a switch 16 that can be activated by way of the control device 11. Depending on the application, however, it is also possible to dispense with the switch 16. Then, the discharge resistor R_{L} must be designed such that it adversely affects the charging operation as little as possible.

In a particularly preferred design, the ohmic discharge resistor is a variable resistor, the absolute value of which can be set in particular by way of the control device 11. Advantageously, it may be possible that the absolute value for the ohmic discharge resistor R_{L} can then be set by control means, and in particular can be set infinitely variably. The setting of the discharge resistor R_{L} can then be parameterized in the aforementioned sense in dependence on the measured charging current I_{charge}.

The resistance of the discharge resistor R_{L} should be chosen to be as small as possible in order to ensure rapid discharging of the parasitic capacitance Cp. Preferably, the resistance of the discharge resistor R_{L} is less than the internal resistance of the power supply unit 9. More preferably, the internal resistance of the power supply unit 9 is greater than the resistance of the discharge resistor R_{L} by at least a factor of 10, in particular by a factor of 100.

The bridging explained above of the high-voltage output 13, 14 of the supplying device 7 is the subject of further teaching, which is of importance in its own right. Notable here is the fact that this further teaching claims the bridging according to the proposal as such, and so the parameterization according to the proposal that is explained further above is not necessarily critical.

On the basis of further teaching, which is likewise of importance in its own right, a device for carrying out one of the methods according to the proposal is claimed. Such a device comprises in any case an electrode 6 and a supplying device 7, which interact in the way explained above. With regard to possible variants and advantages, reference may be made to the statements made above to the extent to which they are suitable for explaining the device according to the proposal.

## Claims

1. A method for the electrostatic charging of non-conducting objects (1),
wherein the objects (1) are charged individually in successive charging cycles (2), wherein, in a charging cycle (2), the respective object (1) is charged by means of at least one electrode (6), to which in the manner of an ionizer there is applied for this purpose by means of a supplying device (7) a high charging voltage U_{charge} against ground or against at least one counter electrode, wherein the charging cycles (2) can be parameterized by means of the supplying device (7),
wherein in the charging cycles (2) the charging current I_{charge} attributable to the respective high charging voltage U_{charge} is measured and the charging cycles (2) are parameterized in dependence on the measured charging current I_{charge} or the measured charging currents I_{charge}, **characterized in that**
the method is carried out as a component part of an in mold labeling (IML) production method.

2. The method as claimed in claim 1, **characterized in that** at least part of the parameterization of a charging cycle (2) is performed from the charging current I_{charg}e measured in a previous charging cycle (2), in particular from the charging current I_{charge} measured in a directly preceding charging cycle (2), and/or **in that** at least part of the parameterization of a charging cycle (2) is performed from the charging current I_{charge} measured in this charging cycle (2) .

3. The method as claimed in claim 1 or 2, **characterized in that** the supplying device (7) comprises a power supply unit (9), in which setpoint values for the high charging voltage U_{charge} are preset, preferably **in that** the setpoint values are switched to the power supply unit (9) in the form of a control voltage Uₛₑₜ.

4. The method as claimed in one of the preceding claims, **characterized in that** the parameterization of a charging cycle (2) comprises the determination and presetting of a setpoint value and/or the variation in a setpoint value for the high charging voltage U_{charge}.

5. The method as claimed in one of the preceding claims, **characterized in that**, in the course of the parameterization of a charging cycle (2), the setpoint value and/or the variation in the setpoint value for the high charging voltage U_{charge} is or are determined from the amount of and/or the variation in the charging current I_{charge}.

6. The method as claimed in one of the preceding claims, **characterized in that**, in dependence on a value derived from the charging current I_{charge} in one charging cycle (2), in particular on the amount of the charging current I_{charge} at a predetermined point in time within the charging cycle (2), the setpoint value for the high charging voltage U_{charge} for a following charging cycle (2) is increased or reduced, preferably **in that** the setpoint value for the high charging voltage U_{charge} is set to an overly high value in the case of the first object (1) to be charged.

7. The method as claimed in one of the preceding claims, **characterized in that**, in dependence on the charging current I_{charge} in one charging cycle (2), the setpoint value for the high charging voltage U_{charge} for a following charging cycle (2) is determined and preset in such a way that at least approximately a predetermined amount of charge is applied to the object (1) in a predetermined charging time in the following charging cycle (2) .

8. The method as claimed in one of the preceding claims, **characterized in that** the parameterization of a charging cycle (2) comprises the determination and introduction of the end of the cycle, preferably **in that** the introduction of the end of the cycle corresponds to the switching off of the high charging voltage U_{charge} or the presetting of the setpoint value for the high charging voltage U_{charge} to a no-load voltage, in particular to 0 V.

9. The method as claimed in claim 8, **characterized in that** the determination of the end of the cycle is based on the monitoring of a switching-off condition and **in that** the switching-off condition is defined on the basis of the charging current I_{charge} during the charging cycle (2), preferably **in that** the switching-off condition is a predetermined lowering of the charging current I_{charge} during a charging cycle (2), preferably **in that** the predetermined lowering corresponds to a percentage fall in the charging current I_{charge} in relation to an initial current value Iₘₐₓ.

10. The method as claimed in claim 8 or 9, **characterized in that** the charging current I_{charge} is integrated over the charging time and **in that** the switching-off condition corresponds to the reaching of a predetermined charge threshold by the integral of the charging current I_{charge} over the charging time .

11. The method as claimed in one of claims 8 to 10, **characterized in that** a predetermined limiting charging time is provided and **in that**, in the event that the switching-off condition has not yet occurred by the time the limiting charging time elapses, the setpoint value for the high charging voltage U_{charge} is increased for a following charging cycle (2) .

12. A method as claimed in claim 1 **characterized**
**in that** the high-voltage output (13, 14) of the supplying device (7) is bridged with a discharge section (15) after the ending of the charging cycle (2), or is constantly bridged.

13. The method as claimed in claim 12, **characterized in that** the discharge section (15) comprises an, in particular variable, ohmmic discharge resistor R_{L}, preferably **in that** the absolute value of the ohmmic resistor RL can be set by control means, in particular can be set infinitely variably.

14. The method as claimed in claim 12 or 13, **characterized in that** the power supply unit (9) has an internal resistance that is greater than the resistance of the discharge resistor R_{L}, preferably is greater than the resistance of the discharge resistor R_{L} by at least a factor of 10, preferably by a factor of 100.

## Patentansprüche

1. Verfahren zum elektrostatischen Laden von nichtleitenden Objekten (1), wobei die Objekte (1) einzeln in aufeinanderfolgenden Ladezyklen (2) geladen werden, wobei in einem Ladezyklus (2) das jeweilige Objekt (1) mittels mindestens einer Elektrode (6) geladen wird, die hierfür nach Art eines Ionisators mittels einer Versorgungseinrichtung (7) mit einer Hoch-Ladespannung U_{charge} gegenüber Masse oder mindestens einer Gegenelektrode beaufschlagt wird, wobei die Ladezyklen (2) mittels der Versorgungseinrichtung (7) parametrierbar sind,
wobei in den Ladezyklen (2) der auf die jeweilige Hoch-Ladespannung U_{charge} zurückgehende Ladestrom I_{Charge} gemessen wird und die Ladezyklen (2) in Abhängigkeit von dem gemessenen Ladestrom I_{Charge} bzw. den gemessenen Ladeströmen I_{Charge} parametriert werden, **dadurch gekennzeichnet, dass**
das Verfahren als ein Komponententeil eines IML(In Mold Labeling)-Fertigungsverfahrens ausgeführt wird.

2. Verfahren nach Anspruch 1, **dadurch gekennzeichnet, dass** zumindest ein Teil der Parametrierung eines Ladezyklus (2) aus dem in einem vorhergehenden Ladezyklus (2) gemessenen Ladestrom I_{Charge}, insbesondere aus dem in einem unmittelbar vorhergehenden Ladezyklus (2) gemessenen Ladestrom I_{charge}, vorgenommen wird, und/oder, dass zumindest ein Teil der Parametrierung eines Ladezyklus (2) aus dem in diesem Ladezyklus (2) gemessenen Ladestrom I_{Charge} vorgenommen wird.

3. Verfahren nach Anspruch 1 oder 2, **dadurch gekennzeichnet,dass** die Versorgungseinrichtung (7) ein Netzteil (9) umfasst, dem Sollwerte für die Hoch-Ladespannung U_{charge} vorgegeben werden, vorzugsweise, dass die Sollwerte in Form einer Steuerspannung Uₛₑₜ auf das Netzteil (9) geschaltet werden.

4. Verfahren nach einem der vorhergehenden Ansprüche, **dadurch gekennzeichnet, dass** die Parametrierung eines Ladezyklus (2) die Ermittlung und Vorgabe eines Sollwerts und/oder eines Sollwertverlaufs für die Hoch-Ladespannung U_{charge} umfasst.

5. Verfahren nach einem der vorhergehenden Ansprüche, **dadurch gekennzeichnet, dass** im Zuge der Parametrierung eines Ladezyklus (2) der Sollwert und/oder der Sollwertverlauf für die Hoch-Ladespannung U_{charge} aus dem Betrag und/oder dem Verlauf des Ladestroms I_{Charge} ermittelt wird bzw. werden.

6. Verfahren nach einem der vorhergehenden Ansprüche, **dadurch gekennzeichnet, dass** in Abhängigkeit von einem aus dem Ladestrom I_{Charge} in einem Ladezyklus (2) abgeleiteten Wert, insbesondere von dem Betrag des Ladestroms I_{Charge} zu einem vorbestimmten Zeitpunkt innerhalb des Ladezyklus (2), der Sollwert für die Hoch-Ladespannung U_{charge} für einen folgenden Ladezyklus (2) erhöht oder reduziert wird, vorzugsweise, dass der Sollwert für die Ladehochspannung U_{charge} beim ersten zu ladenden Objekt (1) auf einen überhöhten Wert gesetzt wird.

7. Verfahren nach einem der vorhergehenden Ansprüche, **dadurch gekennzeichnet, dass** in Abhängigkeit von dem Ladestrom I_{Charge} in einem Ladezyklus (2) der Sollwert für die Hoch-Ladespannung U_{charge} für einen folgenden Ladezyklus (2) derart ermittelt und vorgegeben wird, dass in dem folgenden Ladezyklus (2) zumindest näherungsweise eine vorbestimmte Ladungsmenge in einer vorbestimmten Ladezeit auf das Objekt (1) gebracht wird.

8. Verfahren nach einem der vorhergehenden Ansprüche, **dadurch gekennzeichnet, dass** die Parametrierung eines Ladezyklus (2) die Ermittlung und Einleitung des Zyklusendes umfasst, vorzugsweise, dass die Einleitung des Zyklusendes dem Abschalten der Hoch-Ladespannung U_{charge} oder der Vorgabe des Sollwerts für die Hoch-Ladespannung U_{charge} auf eine Leerlaufspannung, insbesondere auf 0 V, entspricht.

9. Verfahren nach Anspruch 8, **dadurch gekennzeichnet, dass** die Ermittlung des Zyklusendes auf die Überwachung einer Abschaltbedingung zurückgeht und dass die Abschaltbedingung basierend auf dem Ladestrom I_{Charge} während des Ladezyklus (2) definiert ist, vorzugsweise, dass die Abschaltbedingung ein vorbestimmtes Absenken des Ladestroms I_{Charge} während eines Ladezyklus (2) ist, vorzugsweise, dass das vorbestimmte Absenken einem prozentualen Rückgang des Ladestroms I_{Charge} relativ zu einem Strom-Anfangswert Iₘₐₓ entspricht.

10. Verfahren nach Anspruch 8 oder 9, **dadurch gekennzeichnet, dass** der Ladestrom I_{Charge} über die Ladezeit integriert wird und dass die Abschaltbedingung dem Erreichen einer vorbestimmten Ladungsschwelle durch das Integral des Ladestroms I_{Charge} über die Ladezeit entspricht.

11. Verfahren nach einem der Ansprüche 8 bis 10, **dadurch gekennzeichnet, dass** eine vorbestimmte Grenzladezeit vorgesehen ist und dass für den Fall, dass zum Ablauf der Grenzladezeit die Abschaltbedingung nicht eintritt, der Sollwert für die Hoch-Ladespannung U_{charge} für einen folgenden Ladezyklus (2) erhöht wird.

12. Verfahren nach Anspruch 1, **dadurch gekennzeichnet, dass** der Hochspannungsausgang (13, 14) der Versorgungseinrichtung (7) nach Beendigung des Ladezyklus (2) mit einem Entladestrang (15) überbrückt wird oder stets überbrückt wird.

13. Verfahren nach Anspruch 12, **dadurch gekennzeichnet, dass** der Entladestrang (15) einen insbesondere veränderbaren ohmschen Entladewiderstand R_{L} umfasst, vorzugsweise, dass der Betrag des ohmschen Widerstands R_{L} durch Steuermittel, insbesondere stufenlos, einstellbar ist.

14. Verfahren nach Anspruch 12 oder 13, **dadurch gekennzeichnet, dass** das Netzteil (9) einen Innenwiderstand aufweist, der größer ist als der Widerstandswert des Entladewiderstands R_{L}, vorzugsweise, der mindestens um den Faktor 10, vorzugsweise um den Faktor 100, größer ist als der Widerstandswert des Entladewiderstands R_{L}.

## Revendications

1. Procédé destiné à charger électrostatiquement des objets non conducteurs (1), les objets (1) étant chargés individuellement dans des cycles de charge successifs (2), dans lequel, dans un cycle de charge (2), l'objet respectif (1) est chargé au moyen d'au moins une électrode (6), à laquelle est appliquée à cet effet, à la manière d'un ioniseur, au moyen d'un dispositif d'alimentation (7), une tension de charge élevée U_{charge} par rapport à la terre ou par rapport à au moins une contre-électrode, les cycles de charge (2) pouvant être paramétrés au moyen du dispositif d'alimentation (7),
dans lequel, dans les cycles de charge (2), le courant de charge I_{Charge} imputable à la tension de charge élevée U_{charge} respective est mesuré et les cycles de charge (2) sont paramétrés en fonction du courant de charge I_{Charge} mesuré ou des courants de charge I_{Charge} mesurés,
**caractérisé en ce que**
le procédé est réalisé comme une partie constitutive d'un procédé de production avec étiquetage au moulage (IML).

2. Procédé selon la revendication 1, **caractérisé en ce qu'**au moins une partie du paramétrage d'un cycle de charge (2) est effectuée à partir du courant de charge I_{Charge} mesuré dans un cycle de charge précédent (2), en particulier à partir du courant de charge I_{Charge} mesuré dans un cycle de charge qui a directement précédé (2), et/ou **en ce qu'**au moins une partie du paramétrage d'un cycle de charge (2) est effectuée à partir du courant de charge I_{Charge} mesuré dans ce cycle de charge (2) .

3. Procédé selon la revendication 1 ou 2, **caractérisé en ce que** le dispositif d'alimentation (7) comprend une unité d'alimentation électrique (9), dans laquelle des valeurs de consigne pour la tension de charge élevée U_{charge} sont préréglées, de préférence **en ce que** les valeurs de consigne sont basculées à l'unité d'alimentation électrique (9) sous la forme d'une tension de commande Uₛₑₜ.

4. Procédé selon une des revendications précédentes, **caractérisé en ce que** le paramétrage d'un cycle de charge (2) comprend la détermination et le préréglage d'une valeur de consigne et/ou de la variation d'une valeur de consigne pour la tension de charge élevée U_{charge} .

5. Procédé selon une des revendications précédentes, **caractérisé en ce que**, au cours du paramétrage d'un cycle de charge (2), la valeur de consigne et/ou la variation de la valeur de consigne pour la tension de charge élevée U_{charge} est ou sont déterminées à partir de la quantité de et/ou de la variation du courant de charge I_{charge}.

6. Procédé selon une des revendications précédentes, **caractérisé en ce que**, en fonction d'une valeur dérivée du courant de charge I_{Charge} dans un cycle de charge (2), en particulier de la quantité du courant de charge I_{Charge} à un point temporel prédéterminé à l'intérieur du cycle de charge (2), la valeur de consigne pour la tension de charge élevée U_{charge} pour un cycle de charge suivant (2) est augmentée ou diminuée, de préférence **en ce que** la valeur de consigne pour la tension de charge élevée U_{charge} est réglée à une valeur excessivement élevée dans le cas du premier objet (1) à charger.

7. Procédé selon une des revendications précédentes, **caractérisé en ce que**, en fonction du courant de charge I_{Charge} dans un cycle de charge (2), la valeur de consigne pour la tension de charge élevée U_{charge} pour un cycle de charge suivant (2) est déterminée et préréglée de telle sorte qu'au moins approximativement une quantité prédéterminée de charge est appliquée à l'objet (1) en un temps de charge prédéterminé dans le cycle de charge suivant (2).

8. Procédé selon une des revendications précédentes, **caractérisé en ce que** le paramétrage d'un cycle de charge (2) comprend la détermination et l'introduction de la fin du cycle, de préférence **en ce que** l'introduction de la fin du cycle correspond à la coupure de la tension de charge élevée U_{charge} ou au préréglage de la valeur de consigne pour la tension de charge élevée U_{charge} à une tension sans charge, en particulier à 0 V.

9. Procédé selon la revendication 8, **caractérisé en ce que** la détermination de la fin du cycle est basée sur la surveillance d'une condition de coupure et **en ce que** la condition de coupure est définie sur la base du courant de charge I_{Charge} pendant le cycle de charge (2), de préférence **en ce que** la condition de coupure est un abaissement prédéterminé du courant de charge I_{Charge} pendant un cycle de charge (2), de préférence **en ce que** l'abaissement prédéterminé correspond à un pourcentage de chute du courant de charge I_{Charge} par rapport à une valeur initiale de courant Iₘₐₓ.

10. Procédé selon la revendication 8 ou 9, **caractérisé en ce que** le courant de charge I_{Charge} est intégré sur le temps de charge et **en ce que** la condition de coupure correspond à l'atteinte d'un seuil de charge prédéterminé par l'intégrale du courant de charge I_{Charge} sur le temps de charge.

11. Procédé selon une des revendications 8 à 10, **caractérisé en ce qu'**un temps de charge limite prédéterminé est prévu et **en ce que**, dans le cas où la condition de coupure ne s'est pas encore produite au moment où le temps de charge limite s'écoule, la valeur de consigne pour la tension de charge élevée U_{charge} est augmentée pour un cycle de charge suivant (2).

12. Procédé selon la revendication 1, **caractérisé en ce que** la sortie de tension élevée (13, 14) du dispositif d'alimentation (7) est pontée avec une section de décharge (15) à la fin du cycle de charge (2), ou est pontée en permanence.

13. Procédé selon la revendication 12, **caractérisé en ce que** la section de décharge (15) comprend une résistance de décharge ohmique, en particulier variable, R_{L}, de préférence **en ce que** la valeur absolue de la résistance ohmique R_{L} peut être réglée par un moyen de commande, en particulier peut être réglée de façon infiniment variable.

14. Procédé selon la revendication 12 ou 13, **caractérisé en ce que** l'unité d'alimentation électrique (9) a une valeur de résistance interne qui est supérieure à la valeur de résistance de la résistance de décharge R_{L}, de préférence est supérieure à la valeur de résistance de la résistance de décharge R_{L} par un facteur d'au moins 10, de préférence par un facteur de 100.
